# FASCICULE DE BREVET EUROPEEN

(11) **EP 2 899 491 B1**
(45) Date de publication et mention de la délivrance du brevet: **12.02.2020**
(21) Numéro de dépôt: 15290002.3
(22) Date de dépôt: 07.01.2015
(51) Int. Cl.: F41G 7/22, B64C 39/02, F42B 12/40, F41G 3/18, F41H 7/00, F42B 12/36, G05D 1/12

(54) **Système de traitement de cible comprenant un dispositif de marquage de cible**
Zielverarbeitungssystem, das eine Vorrichtung zur Zielmarkierung umfasst
Target-processing system comprising a target-marking device

(30) Priorité: 22.01.2014 FR 1400120
(43) Date de publication de la demande: 29.07.2015
(73) Titulaire: MBDA France, 92350 Le Plessis-Robinson (FR)
(72) Inventeur: Kotenkoff, Alexandre, 92260 Fontenay-AUX-Roses (FR); Vigouroux, David, 92350 LE Plessis-Robinson (FR); Vivares, Antoine, 75015 Paris (FR); Hebert, Olivier, 75014 Paris (FR); Durantin, Arnaud, 93350 LE Bourget (FR)
(74) Mandataire: Gevers & Orès

(56) Documents cités:
- US-A- 4 281 809
- US-A- 4 867 034
- US-A1- 2010 198 514
- US-A1- 2010 259 614

## Description

La présente invention concerne un système de traitement de cible comprenant un dispositif de marquage de cible.

Dans le cadre de la présente invention, on entend par traitement d'une cible, le fait d'agir sur cette cible, par exemple pour la neutraliser, la détruire, l'emporter,...

Bien que non exclusivement, la présente invention s'applique plus particulièrement au domaine militaire et notamment à la neutralisation d'une cible, tel qu'un char par exemple, par l'intermédiaire d'au moins un engin volant tel qu'un missile notamment.

Un tel engin volant comprend, généralement, un ensemble de capteurs embarqués permettant de reconnaître et d'analyser la cible, ainsi que des moyens pour la neutraliser. Bien que souvent très coûteux, ces capteurs ne présentent pas, en général, une résolution suffisante pour réaliser une acquisition précise d'une cible (ou objectif) lorsque l'engin volant se déplace à très grande vitesse, depuis une altitude élevée, ou lorsque l'acquisition et l'analyse de la cible doivent se faire à plusieurs kilomètres de distance.

De plus, dans le cas d'un engin volant de type consommable (c'est-à-dire un engin volant qui n'est plus utilisable une fois sa mission remplie), il n'est pas possible de récolter des informations concernant le succès de la mission et/ou les conséquences sur l'environnement immédiat de la cible.

De façon usuelle, pour assigner un engin volant à une cible, il existe plusieurs approches :
A/ une première approche usuelle suppose qu'un opérateur soit présent à proximité d'une zone d'objectif où se situe la cible. Cet opérateur, grâce notamment à un pointeur laser, doit illuminer la cible afin que l'engin volant puisse l'identifier et être guidé vers cette dernière. Les principaux inconvénients de cette première approche sont :
   - une difficulté d'accès par l'opérateur à la zone d'objectif ;
   - la perte des capteurs embarqués (notamment optoélectroniques), lorsque l'engin volant est de type consommable ; et
   - des problématiques de résolutions insuffisantes d'un capteur, lorsque l'engin volant et donc le capteur embarqué sont encore loin de la cible ; et
B/ une seconde approche usuelle suppose qu'un opérateur soit dans la boucle de décision, bien qu'il puisse se trouver à distance importante de la cible. Dans ce cas, l'opérateur reçoit, via une liaison de transmission de données, des images provenant d'un capteur embarqué sur l'engin volant et il peut générer des ordres notamment de guidage ou d'activation en fonction des images reçues. Les principaux inconvénients de cette seconde approche sont :
   - la perte des capteurs embarqués (notamment optoélectroniques), lorsque l'engin volant est de type consommable ;
   - des problématiques de résolutions insuffisantes d'un capteur, lorsque l'engin volant et donc le capteur embarqué sont encore loin de la cible ; et
   - un faible temps de réaction laissé à l'opérateur lorsque l'engin volant se rapproche rapidement de la cible.

Ces solutions usuelles de traitement de cible ne sont donc pas complètement satisfaisantes.

Par ailleurs, on connaît :
- par le document US-2010/198514, un système comprenant un drone configuré pour passer d'un mode de guidage terminal vers un autre mode et notamment vers un mode de recherche de cible ;
- par le document US-4 281 809, une méthode pour bombarder une pluralité de cibles, en lançant une munition guidée de façon précise vers une première cible et en lançant ensuite des munitions vers de secondes cibles ; et
- par le document US-4 867 034, un procédé et un système de marquage de cibles.

La présente invention concerne un système de traitement de cible selon la revendication 1, comprenant un dispositif de marquage de cible, qui permet d'aider à remédier à cet inconvénient.

A cet effet, selon l'invention, ledit dispositif de marquage de cible est remarquable, en ce qu'il comprend au moins :
- une unité volante de taille réduite, ladite unité volante étant configurée pour voler à basse hauteur et pour être guidée à l'aide d'ordres de guidage, ladite unité volante étant munie d'au moins un capteur apte à mesurer au moins un paramètre de l'environnement ;
- une unité de transmission de données configurée pour émettre au moins des données relatives à des mesures réalisées par le capteur à partir de l'unité volante et pour recevoir des ordres de guidage au niveau de ladite unité volante ; et
- au moins un émetteur monté sur l'unité volante et apte à émettre une information de position.

De préférence, ladite unité volante vole à une hauteur inférieure à cinquante mètres, et selon l'invention, sa taille est inférieure à celle d'un cube de vingt centimètres de côtés.

Ainsi, grâce à l'invention, on dispose d'un dispositif de marquage de cible pourvu d'une unité volante qui présente une taille réduite, lui permettant de voler à basse hauteur sans être repérée, ce qui lui permet de s'approcher à proximité d'une cible et donc de pouvoir utiliser des capteurs à coût réduit, par exemple des capteurs (optiques ou infrarouges) à résolution réduite.

De plus, grâce à l'unité de transmission de données, permettant à l'unité volante de communiquer avec un poste déporté, un opérateur peut recevoir des données notamment de l'environnement de l'unité volante et lui envoyer des ordres de guidage pour la guider, à distance, ce qui permet à l'opérateur de se mettre à l'abri tout en étant dans la boucle de commande.

Dans un mode de réalisation préféré, l'unité volante est pourvue au moins d'un capteur apte à générer une image d'au moins une partie de l'environnement de l'unité volante, et l'unité de transmission de données est configurée pour transmettre ladite image à une unité d'affichage dudit poste déporté.

En outre, dans un mode de réalisation particulier, l'unité volante est pourvue d'au moins l'un des capteurs suivants :
- un capteur thermique ;
- un capteur apte à générer une image (optique ou infrarouge) de l'environnement ;
- au moins un capteur apte à analyser l'un des paramètres suivants de l'environnement : un paramètre chimique, un paramètre mécanique (vibrations,...), et un paramètre électromagnétique.

Selon l'invention, ledit émetteur est fixé (ou monté de manière fixe) sur ladite unité volante. De plus, de façon avantageuse, en complément, le dispositif de marquage de cible comprend un émetteur qui est monté, de façon amovible, sur l'unité volante et est pourvu d'au moins un élément d'attache configuré pour permettre d'attacher ledit émetteur sur un support (autre que l'unité volante).

Dans un mode de réalisation préféré, ledit émetteur est configuré pour émettre un faisceau de guidage directionnel.

En outre, de façon avantageuse, ladite unité volante comporte au moins une unité centrale configurée pour traiter des données et au moins des données reçues dudit capteur. Dans une variante de réalisation, ladite unité centrale est apte à déterminer automatiquement des ordres de guidage utilisés pour guider l'unité volante.

Par ailleurs, dans un mode de réalisation particulier, ladite unité volante comporte une unité de réception configurée pour recevoir des signaux électromagnétiques, et une unité de gestion de données configurée pour gérer (ou traiter) des signaux électromagnétiques reçus par ladite unité de réception, ce qui permet de créer une chaîne de guidage à partir d'une pluralité de telles unités volantes, comme précisé ci-dessous.

En outre, dans un mode de réalisation particulier, ladite unité volante est pourvue de moyens activables aptes à générer une explosion, déclenchée automatiquement ou à distance par un opérateur notamment, pour détruire par exemple une cible (en particulier une mine) à proximité de laquelle ou sur laquelle se trouve l'unité volante.

La présente invention concerne également un système de traitement de cible. Selon l'invention, ledit système de traitement de cible comprend :
- au moins un dispositif de marquage de cible, tel que celui précité ; et
- au moins un engin volant autonome, ledit engin volant autonome comprenant :
   - des moyens de détection d'informations de position, émises par l'émetteur dudit dispositif de marquage de cible ;
   - des moyens de gestion de ces informations de position en vue du guidage de l'engin volant ; et
   - des moyens de traitement d'une cible.

Ainsi, grâce au marquage de cible réalisé à l'aide de l'unité volante, il n'est pas nécessaire que l'engin volant de traitement de cible (ou un opérateur) émette des signaux, notamment un faisceau de désignation de cible, pour le guidage dudit engin volant vers la cible à traiter. L'engin volant est ainsi très discret. De plus, il est complètement autonome.

Dans un mode de réalisation particulier, ledit système de traitement de cible comporte une pluralité de dispositifs de marquage de cible, ladite pluralité de dispositifs de marquage de cible étant aptes à communiquer entre eux afin de se positionner dans l'espace les uns par rapport aux autres de manière à créer une chaîne de guidage pour au moins un engin volant autonome.

Ledit système de traitement de cible conforme à la présente invention peut être mis en œuvre dans différentes applications.

En particulier, dans une première application :
- ledit dispositif de marquage de cible est un dispositif de marquage d'une cible à neutraliser, par exemple un char ; et
- ledit engin volant autonome est un missile destiné à neutraliser (détruire) cette cible.

En outre, dans une seconde application :
- ledit dispositif de marquage de cible est un dispositif de localisation d'une ou plusieurs personnes en détresse ; et
- ledit engin volant autonome est un véhicule de secours, de préférence un aéronef de secours.

Les figures du dessin annexé feront bien comprendre comment l'invention peut être réalisée. Sur ces figures, des références identiques désignent des éléments semblables.
La figure 1 est le schéma synoptique d'un dispositif de marquage de cible qui illustre un mode de réalisation de l'invention.
La figure 2 est le schéma synoptique d'un système de traitement de cible.
Les figures 3 et 4 montrent deux exemples différents d'émission de signaux à partir d'une cible.
La figure 5 illustre schématiquement une chaîne de guidage comprenant une pluralité de dispositifs de marquage de cible.
Les figures 6 et 7 illustrent deux applications possibles de l'invention.

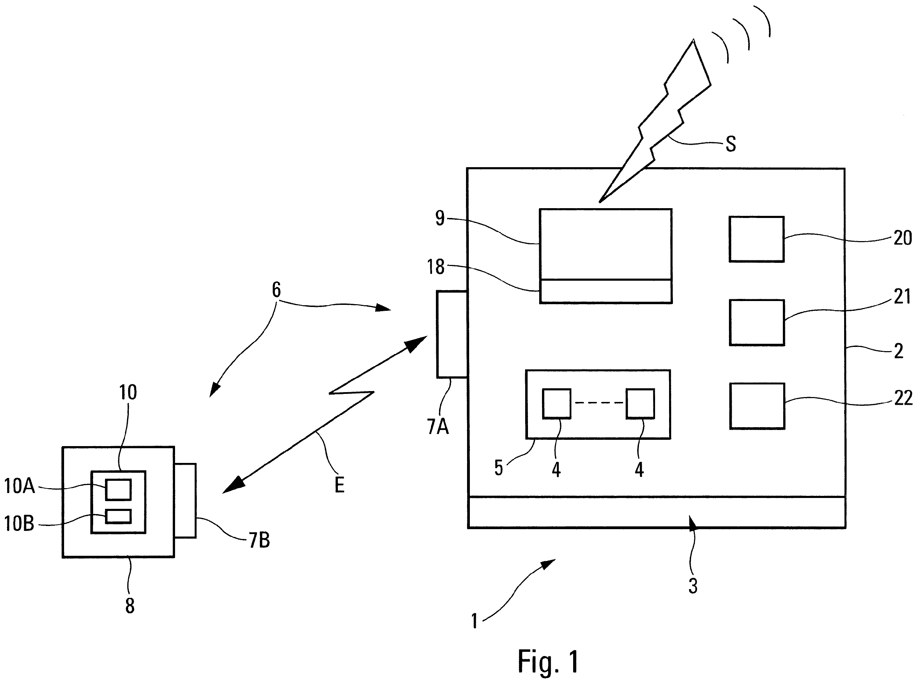

Le dispositif 1 représenté schématiquement sur la figure 1 et permettant d'illustrer l'invention, est destiné au moins à marquer une cible.

Selon l'invention, ce dispositif de marquage de cible 1 comprend :
- une unité volante 2 de taille réduite, représentée très schématiquement sur la figure 1. Cette unité volante 2 comprend des moyens 3 usuels (notamment des moyens de sustentation (aile fixe, aile tournante,...) et de génération d'une force d'avancement)), qui sont représentés de façon schématique et qui sont formés de manière à faire voler l'unité volante 2. Plus particulièrement, comme précisé ci-dessous, l'unité volante 2 est formée de manière à voler à basse hauteur, en étant guidée à l'aide d'ordres de guidage. Ladite unité volante 2 est pourvue d'un ensemble 5 de capteur(s), comprenant au moins un capteur 4 précisé ci-dessous, qui est apte à mesurer au moins un paramètre de l'environnement ;
- une unité de transmission de données 6 qui comprend un élément d'émission/réception 7A. Cet élément d'émission/réception 7A est monté sur l'unité volante 2 et est formé de manière à émettre et à recevoir des signaux de type électromagnétique (illustrés par une double flèche E sur la figure 1), afin de transmettre à distance des données (notamment des données relatives à des mesures réalisées par au moins un capteur 4 de l'ensemble 5) à partir de l'unité volante 2 et de recevoir des ordres de guidage au niveau de ladite unité volante 2. Pour ce faire, l'unité de transmission de données 6 comprend, de plus, au moins un autre élément d'émission/réception 7B qui est agencé par exemple au niveau d'un poste 8 déporté notamment au sol et qui est apte à échanger, de façon usuelle, des informations avec l'élément d'émission/réception 7A monté sur l'unité volante 2 ; et
- au moins un émetteur 9 monté, de façon fixe ou mobile, sur l'unité volante 2 et apte à émettre une information de position, via un signal électromagnétique, précisé ci-dessous et illustré par un symbole S.

L'unité volante 2 présente, de préférence, les caractéristiques suivantes :
- une altitude de vol comprise entre 0 et 50 mètres ;
- une taille inférieure à celle d'un cube de vingt centimètres de côtés, c'est-à-dire dont: L<20cm, l<20cm, h<20cm (avec L: longueur; l: largeur; h : hauteur) ; et
- une distance de rapprochement de l'unité volante 2 par rapport à un objectif (cible) qui est située entre 0 mètre (ou contact direct) et 10 mètres selon les cas.

Le dispositif de marquage de cible 1 pourvu de l'unité volante 2 qui présente donc une taille réduite permettant de voler à basse hauteur sans être repérée, est ainsi en mesure de s'approcher (de façon discrète) à proximité d'une cible C et donc de pouvoir utiliser des capteurs 4 à coût réduit, par exemple des capteurs (optiques ou infrarouges) à résolution réduite.

De plus, grâce à l'unité de transmission de données 6, permettant à l'unité volante 2 de communiquer avec un poste 8 déporté, un opérateur (situé au niveau de ce poste 8) peut recevoir des données, notamment des données de l'environnement de l'unité volante 2, et lui envoyer des ordres de guidage pour la guider à distance à l'aide d'une unité d'interface 10. Cette unité d'interface 10 comprend, par exemple, une unité d'affichage 10A pourvue d'un écran et une unité de saisie de données 10B telle qu'une souris d'ordinateur, un pavé tactile ou une unité de reconnaissance vocale, permettant à un opérateur de saisir des données, notamment des données devant être transmises via l'unité de transmission de données 6.

Ainsi, l'opérateur peut se mettre à l'abri tout en faisant partie de la boucle de décision, notamment de commande et de guidage du dispositif 1. En effet, dans ce cas, l'opérateur peut recevoir, via une liaison E de transmission de données, notamment des images provenant d'un capteur 4 embarqué sur l'unité volante 2, qui sont affichées sur l'unité d'affichage 10A, et il peut générer des ordres notamment de guidage ou d'activation en fonction des images ainsi reçues. Les ordres peuvent être transmis à l'unité volante 2 via la liaison E, soit directement, soit indirectement par l'intermédiaire de relais (par exemple d'autres unités volantes 2).

La miniaturisation de l'unité volante 2 (d'observation et d'acquisition) lui permet de réaliser plus facilement au moins certaines des fonctions suivantes, précisées ci-après :
- s'approcher d'une cible C ;
- observer une cible C ;
- marquer une cible C ;
- guider ;
- transmettre une information ; et
- fournir un compte-rendu de mission.

Pour des applications militaires notamment, la miniaturisation est bien entendu essentielle en termes de discrétion.

Selon l'invention, le dispositif de marquage de cible 1 fait partie d'un système de traitement de cible 12.

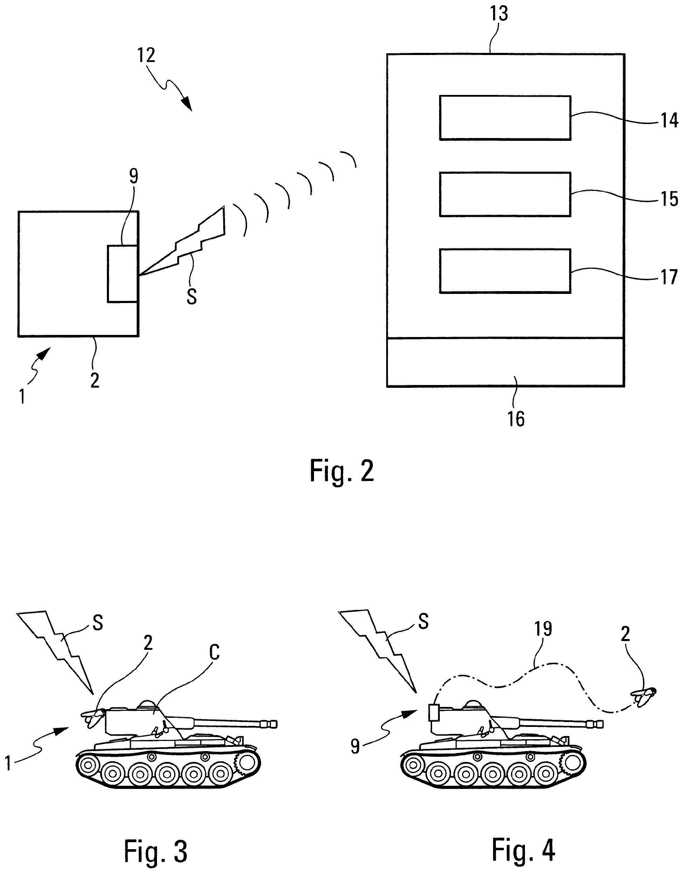

Le système de traitement de cible 12 comprend, comme représenté schématiquement sur la figure 2, au moins un dispositif de marquage de cible 1 tel que celui précité, ainsi qu'au moins un engin volant 13. Cet engin volant 13 est autonome et comprend :
- une unité de détection 14 apte à recevoir des informations de position, émises par l'émetteur 9 du dispositif de marquage de cible 1, sous forme d'un signal S ;
- une unité de gestion 15 formée de manière à gérer (ou traiter) notamment ces informations de position (transmises sous forme du signal S) en vue du guidage de l'engin volant 13 ;
- des moyens usuels 16 (notamment des moyens de sustentation (aile, aileron,...) et des moyens de génération d'une force d'avancement (réacteur, aile tournante,...)), qui sont représentés de façon schématique et qui sont formés de manière à faire voler l'engin volant 13 ; et
- des moyens 17 de traitement d'une cible, à savoir des moyens usuels pour, par exemple, détruire, neutraliser ou emporter la cible C.

Ainsi, grâce à un marquage d'une cible C réalisé par l'unité volante 2 à l'aide d'un émetteur 9, il n'est pas nécessaire que l'engin volant 13 de traitement de cible (ou un opérateur) émette des signaux, notamment un faisceau de désignation de la cible, pour le guidage dudit engin volant 13 vers une cible C à traiter. L'engin volant 13 est ainsi très discret et présente un faible coût. De plus, il est complètement autonome, car il utilise uniquement les signaux S pour se guider vers la cible C.

Dans un mode de réalisation particulier, l'unité volante 2 est pourvue d'au moins l'un des capteurs 4 (ou moyens d'identification) usuels suivants :
- un capteur thermique ;
- un capteur apte à générer une image (optique ou infrarouge) de l'environnement ;
- un capteur apte à analyser un paramètre chimique (analyse de la signature chimique : peintures, explosifs, gaz d'échappement, odeurs humaines,...) ;
- un capteur apte à analyser un paramètre électromagnétique ; et
- un capteur de type mécanique (sonar, détecteur de vibrations ou détecteur sismique).

Dans un mode de réalisation préféré, l'unité volante 2 est pourvue au moins d'un capteur 4 apte à générer une image d'au moins une partie de l'environnement de l'unité volante 2, et l'unité de transmission de données 6 est configurée pour transmettre cette image à l'unité d'affichage 10A de l'unité d'interface 10 située au niveau du poste 8 déporté, ce qui permet à un opérateur déporté de voir l'environnement de l'unité volante 2 et notamment d'une cible C, et ceci à la fois avant et après le traitement de la cible C.

Par ailleurs, l'émission réalisée par l'émetteur 9 (et illustrée par un signal S sur les figures) peut présenter les caractéristiques suivantes :
- une portée d'émission au minimum de 200 mètres ;
- un mode d'émission : directionnel ou omnidirectionnel, avec un relais possible pour la constitution de chaînes de communication. Une chaîne de communication permet notamment d'augmenter la portée d'émission ;
- l'un des types d'émission suivants : laser, radio.

Selon l'invention, ledit émetteur 9 est fixé (ou monté de façon fixe) sur ladite unité volante 2. Dans ce cas, pour marquer une cible C, par exemple un char, l'unité volante 2 se pose directement sur la cible C, comme représenté sur la figure 3. Toutefois, dans ce cas, si le traitement de la cible C consiste en une destruction de cette dernière, l'unité volante 2 est également détruite lors de ce traitement.

Selon un variante ne formant pas partie de l'invention, ou en complément, le dispositif de marquage de cible 1 comprend un émetteur 9 qui est monté de façon amovible sur l'unité volante 2. Cet émetteur 9 est pourvu d'au moins un élément d'attache 18 configuré pour permettre d'attacher ledit émetteur 9 sur un support (autre que l'unité volante 2) et notamment sur une cible C, comme illustré sur la figure 4.

Dans ce dernier mode de réalisation, l'unité volante 2 se pose sur la cible C et libère l'émetteur 9 qui est attaché sur la cible C, à l'aide de l'élément d'attache 18. L'unité volante 2 peut ensuite s'écarter de la cible C, comme représenté sur la figure 4 (en suivant une trajectoire 19), afin de ne pas être atteinte lors d'un traitement ou d'une destruction de la cible C et/ou pour réaliser une autre mission. En particulier, l'unité volante 2 peut comporter une pluralité d'émetteurs 9 qu'elle peut placer successivement sur différentes cibles. L'élément d'attache 18 pour attacher (ou accrocher) l'émetteur 9 sur une cible C et, peut comporter au moins l'un des éléments : un adhésif chimique, un aimant, une ventouse, une fixation mécanique,...

En outre, dans un mode de réalisation préféré, ledit émetteur 9 est configuré pour émettre un faisceau de guidage S de type directionnel, notamment pour faciliter le guidage d'un engin volant 13 coopérant.

Par ailleurs, ladite unité volante 2 comporte au moins une unité centrale 20 configurée pour traiter des données, et au moins des données reçues d'au moins un capteur 4 dudit ensemble 5. Dans un mode de réalisation particulier, ladite unité centrale 20 est apte à déterminer automatiquement des ordres de guidage utilisés par les moyens 3 pour guider l'unité volante 2. L'unité volante 2 peut ainsi être guidée automatiquement sans intervention ou avec une intervention restreinte d'un opérateur.

Par ailleurs, dans un mode de réalisation particulier, ladite unité volante 2 comporte également une unité de réception 21 configurée pour recevoir des signaux électromagnétiques. Cette unité de réception 21 peut être apte à recevoir des signaux :
- tels que des signaux S émis par un émetteur 9 d'une autre unité volante 2 ou par un émetteur 9 placé sur une cible C ; ou
- d'autres signaux émis à partir d'une unité volante 2, par exemple tels que ceux E émis par un élément d'émission/réception 7A ou 7B. Dans ce dernier cas, l'unité de réception 21 peut faire partie de l'unité de transmission de données 6.

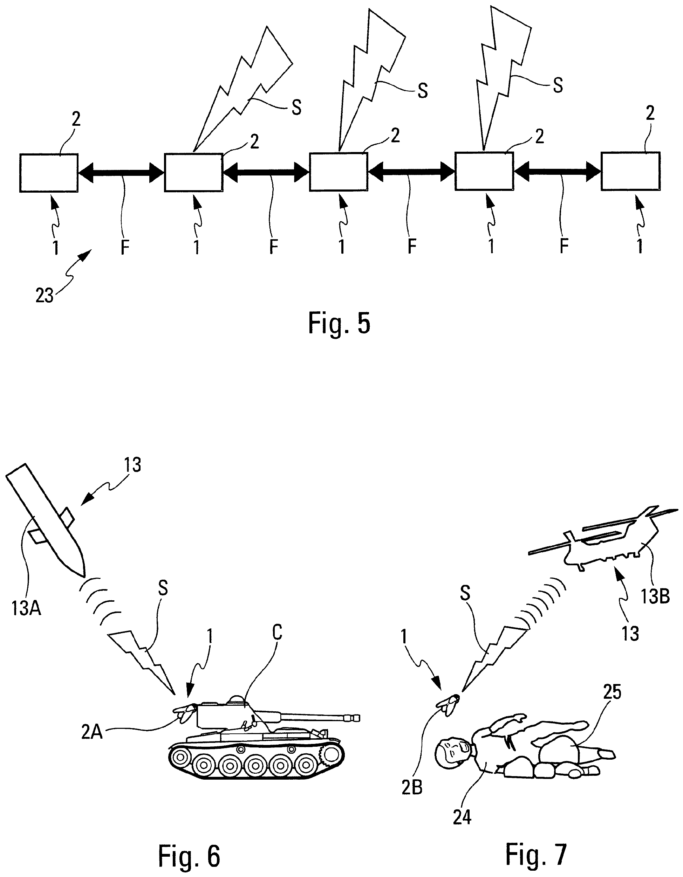

L'unité de réception 21 peut également faire partie d'une unité de transmissions d'informations, destinée uniquement à une communication entre unités volantes 2, comme illustré par des doubles flèches F sur la figure 5.

Dans un mode de réalisation particulier, l'unité volante 2 comporte une unité de gestion de données, qui fait, par exemple, partie de l'unité centrale 20 et qui est configurée pour gérer (ou traiter) des signaux électromagnétiques reçus par ladite unité de réception 21, ce qui permet de créer une chaîne de guidage 2 à partir d'une pluralité de telles unités volantes 2 (figure 5), comme précisé ci-dessous.

Par ailleurs, dans un mode de réalisation particulier permettant de détruire une cible C telle qu'une mine par exemple, ladite unité volante 2 est pourvue de moyens activables 22 aptes à générer une explosion. Cette explosion, qui a donc comme but de détruire une cible C à proximité de laquelle ou sur laquelle se trouve l'unité volante 2, peut être déclenchée :
- soit automatiquement, par exemple en fonction de mesures réalisées par au moins un capteur 4 de l'ensemble 5 ;
- soit à distance par un opérateur, par exemple via l'unité de transmission de données 6.

Comme indiqué ci-dessus, le système de traitement de cible 12 comprend, comme représenté sur la figure 2, au moins un dispositif de marquage de cible 1, tel que celui précité, et au moins un engin volant 13 autonome.

La présente invention prévoit donc une fonction d'assignation et de reconnaissance dans une unité volante 2 commandée automatiquement ou par un opérateur. Cette fonction est indépendante de l'engin volant 13 ayant en charge de délivrer un effet ou d'accomplir une mission. En d'autres termes, avec le système 12 conforme à l'invention, le rôle d'observation et d'assignation d'une part et le rôle de traitement d'une cible C d'autre part, sont ainsi assurés par deux vecteurs physiques séparés.

L'unité volante 2 peut, notamment, réaliser les tâches suivantes :
- identification de la cible C (au plus près) ;
- désignation fiable de la cible C jusqu'au guidage terminal ; et
- dépôt d'un marqueur (émetteur 9) sur la cible C, dans une variante de réalisation particulière avec un marqueur amovible.

L'unité volante 2 transmet l'ensemble des informations nécessaires à l'engin volant 13 (via des signaux S), afin que celui-ci puisse réaliser sa mission. L'engin volant 13 de type autonome est guidé en aveugle par l'unité volante 2.

Lorsque l'engin volant 13 a effectué sa mission, l'unité volante 2 peut réaliser un compte-rendu de mission, par exemple en prenant une image de l'environnement de la cible à l'aide d'un capteur 4 approprié, et :
- en l'envoyant à un poste 8 déporté pour l'afficher sur l'unité d'affichage 10A, ce qui permet notamment à un opérateur se trouvant à ce poste 8 déporté de savoir immédiatement si l'engin volant 13 a bien rempli sa mission ; et/ou
- en l'enregistrant pour une lecture et un traitement ultérieurs.

D'autres stratégies d'utilisation complémentaires de la présente invention sont également envisageables. En particulier, plusieurs unités volantes 2 peuvent être utilisées, afin de former une chaîne 23 d'observation et de guidage vers un objectif final, chaque unité volante 2 fournissant ainsi un point d'observation, puis un point de passage, comme représenté sur la figure 5.

Pour ce faire, ledit système de traitement de cible 12 comporte une pluralité de dispositifs de marquage de cible 1. Ces dispositifs de marquage de cible 1 sont aptes à communiquer entre eux (comme illustré par des flèches F sur la figure 5), afin de se positionner dans l'espace les uns par rapport aux autres de manière à créer une chaîne de guidage 23 pour au moins un engin volant autonome (non représenté), recevant des signaux S successivement des différentes unités volantes 2 lors d'un déplacement le long de la chaîne de guidage 23.

Le système de traitement de cible 12 conforme à la présente invention peut être mis en œuvre dans différentes applications.

Dans une application particulière, relative à un contexte militaire, la présente invention peut être utilisée pour le guidage d'un missile, notamment à bas coût. Dans cette application :
- l'engin volant 13 autonome est un missile 13A, comme représenté à titre d'exemple sur la figure 6 ; et
- ledit dispositif de marquage de cible 1 comprend une unité aérienne miniaturisée 2A de marquage d'une cible C, par exemple un bâtiment à neutraliser ou bien un véhicule tel qu'un char comme représenté sur la figure 6.

Plus précisément, le dispositif de marquage de cible 1 comprend une unité 2A d'observation et de renseignement qui va réaliser, notamment, les opérations suivantes :
- reconnaître la cible C ;
- envoyer la position au missile 13A ; et
- éventuellement, réaliser une vérification de destruction de la cible C (dans le cas où le guidage est réalisé via un émetteur 9 posé sur la cible C, après un éloignement de l'unité 2A).

Une autre application militaire possible (non représentée) concerne un déminage au cours d'une mission à grande échelle, impliquant au moins un convoi de véhicules terrestres. On sait que les mines sont une menace importante pour un convoi de véhicules terrestres. Elles sont, en particulier, difficilement identifiables et leur explosion révèle à l'ennemi la localisation du convoi. Le but de l'application est de localiser les mines en amont du convoi sans les faire exploser. Un ou plusieurs dispositifs de marquage de cible 1 sont chargés d'identifier les mines et de poser des marqueurs 9 près de leur position. Les marqueurs 9 émettent un signal S pour être facilement identifiables par le convoi.

Par ailleurs, dans une autre application, la présente invention peut être mise en œuvre lors de catastrophes naturelles (tremblement de terre, avalanche,...) ou d'accidents (explosions,...) par exemple d'origine industrielle. On sait que souvent, lors de catastrophes naturelles ou de certains accidents industriels notamment, les secours ont de grandes difficultés à identifier les blessés, par exemple dans des décombres ou sous la neige. Un ou plusieurs blessés 24 pouvant par exemple se trouver sous des gravats 25, comme illustré très schématiquement sur la figure 7, il est très difficile d'identifier les blessés 24 en survolant les zones sinistrés à haute altitude. Une autre problématique est d'avoir parfois à s'occuper d'un grand nombre de blessés simultanément, ce qui nécessite de réaliser des priorités. Dans ce cadre :
- ledit dispositif de marquage de cible 1 est un dispositif de localisation de personnes en détresse. Plus précisément, ce dispositif 1 comprend une unité aérienne 1B en charge d'explorer la zone de l'accident ou de la catastrophe, de réaliser un premier diagnostic et de maintenir un premier contact avec des personnes 24 localisées ; et
- ledit engin volant autonome 13 est un véhicule de secours, en particulier un aéronef de secours tel qu'un hélicoptère autonome 13B qui a la capacité de secourir les blessés, comme illustré sur la figure 7.

La présente invention, telle que décrite ci-dessus, présente notamment les avantages suivants :
- elle fiabilise la localisation, l'identification et l'assignation d'une cible C ;
- elle fiabilise le guidage en fournissant un objectif final (cible C) et, éventuellement, des points de passage beaucoup plus précis ;
- en dissociant physiquement la fonction d'acquisition de la fonction qui traite la cible C, elle permet de laisser plus de temps à la mise en œuvre d'une étape d'observation et d'acquisition ;
- elle permet de réduire considérablement le coût de la chaîne fonctionnelle :
   - parce que les fonctions coûteuses d'acquisition sont déportées dans l'unité volante 2 qui peut être réutilisable ; et
   - parce qu'en s'approchant beaucoup plus près de la cible C, l'unité volante 2 (d'observation et d'acquisition) peut utiliser des capteurs 4 moins coûteux ; et
- elle offre une flexibilité d'utilisations par rapport à un vecteur qui co-localise physiquement toutes les différentes fonctions nécessaires.

## Revendications

1. Système de traitement de cible, ledit système comprenant :
- au moins un dispositif de marquage de cible (1), ledit dispositif (1) comprenant au moins :
• une unité volante (2) de taille réduite, ladite unité volante (2) étant configurée pour voler à basse hauteur et pour être guidée à l'aide d'ordres de guidage, ladite unité volante (2) étant munie d'au moins un capteur (4) apte à mesurer au moins un paramètre de l'environnement ;
• une unité de transmission de données (6) ; et
• au moins un émetteur (9) apte à émettre une information de position ; et
- au moins un engin volant (13) autonome, ledit engin volant (13) autonome comprenant :
• des moyens (14) de détection d'informations de position, émises par l'émetteur (9) dudit dispositif de marquage de cible (1) ;
• des moyens (15) de gestion de ces informations de position en vue du guidage de l'engin volant (13) ; et
• des moyens (17) de traitement d'une cible (C);
**caractérisé en ce que** l'unité volante (2) présente une taille inférieure à celle d'un cube de vingt centimètres de côtés, **en ce que** l'unité de transmission de données (6) est configurée pour émettre au moins des données relatives à des mesures réalisées par le capteur (4) à partir de l'unité volante (2) et pour recevoir des ordres de guidage au niveau de ladite unité volante (2) et **en ce que** ledit émetteur (9) est fixé sur ladite unité volante (2).

2. Système selon la revendication 1,
**caractérisé en ce que** l'unité volante (2) est pourvue au moins d'un capteur (4) apte à générer une image d'au moins une partie de l'environnement de l'unité volante, et **en ce que** ladite unité de transmission de données (6) est configurée pour transmettre ladite image à une unité d'affichage (10A) d'un poste (8) déporté.

3. Système selon l'une des revendications 1 et 2,
**caractérisé en ce que** l'unité volante (2) est pourvue d'au moins l'un des capteurs (4) suivants :
- un capteur thermique ;
- un capteur apte à générer une image de l'environnement ;
- au moins un capteur apte à analyser l'un des paramètres suivants de l'environnement : un paramètre chimique, un paramètre mécanique, et un paramètre électromagnétique.

4. Système selon l'une quelconque des revendications précédentes, **caractérisé en ce qu'**il comporte en complément au moins un émetteur supplémentaire (9) qui est monté, de façon amovible, sur ladite unité volante (2) et est pourvu d'au moins un élément d'attache (18) configuré pour permettre d'attacher ledit émetteur supplémentaire (9) sur un support (C).

5. Système selon l'une quelconque des revendications précédentes, **caractérisé en ce que** ledit ou lesdits émetteurs (9) sont configurés pour émettre un faisceau de guidage directionnel.

6. Système selon l'une quelconque des revendications précédentes, **caractérisé en ce que** ladite unité volante (2) comporte au moins une unité centrale (20) configurée pour traiter des données et au moins des données reçues dudit capteur (4).

7. Système selon la revendication 6,
**caractérisé en ce que** ladite unité centrale (2) est apte à déterminer automatiquement des ordres de guidage utilisés pour guider l'unité volante (2).

8. Système selon l'une quelconque des revendications précédentes,
**caractérisé en ce que** ladite unité volante (2) comporte une unité de réception (21) configurée pour recevoir des signaux électromagnétiques, et une unité de gestion de données (20) configurée pour traiter des signaux électromagnétiques reçus par ladite unité de réception (21).

9. Système selon l'une quelconque des revendications précédentes,
**caractérisé en ce que** ladite unité volante (2) est pourvue de moyens (22) activables aptes à générer une explosion.

10. Système selon la revendication 8,
**caractérisé en ce qu'**il comporte une pluralité de dispositifs de marquage de cible (1), ladite pluralité de dispositifs de marquage de cible (1) étant aptes à communiquer entre eux via une unité de transmission d'informations comprenant les unités de réception (21), afin de se positionner dans l'espace les uns par rapport aux autres de manière à créer une chaîne de guidage (23) pour au moins un engin volant (13) autonome, recevant des signaux (S) successivement des différentes unités volantes (2) lors d'un déplacement le long de la chaîne de guidage (23).

11. Système selon l'une quelconque des revendications 1 à 10,
**caractérisé en ce que** :
- ledit dispositif de marquage de cible (1) est un dispositif de marquage d'une cible à neutraliser ; et
- ledit engin volant (13) autonome est un missile (13A).

12. Système selon l'une quelconque des revendications 1 à 10,
**caractérisé en ce que** :
- ledit dispositif de marquage de cible (1) est un dispositif de localisation d'au moins une personne (24) en détresse et de marquage de sa position ; et
- ledit engin volant (13) autonome est un véhicule de secours (13B).

## Patentansprüche

1. Zielverarbeitungssystem, wobei das System Folgendes umfasst:
- mindestens eine Zielmarkierungsvorrichtung (1), wobei die Vorrichtung (1) mindestens Folgendes umfasst:
• eine Flugeinheit (2) mit reduzierter Größe, wobei die Flugeinheit (2) konfiguriert ist, um in niedriger Höhe zu fliegen, und um mit Hilfe von Führungsbefehlen geführt zu werden, wobei die Flugeinheit (2) mit mindestens einem Sensor (4) versehen ist, der geeignet ist, mindestens einen Parameter der Umgebung zu messen;
• eine Datenübertragungseinheit (6); und
• mindestens einen Sender (9), der geeignet ist, eine Positionsinformation zu senden; und
- mindestens ein autonomes Fluggerät (13), wobei das autonome Fluggerät (13) Folgendes umfasst:
• Mittel (14) zum Erfassen von Positionsinformationen, die von dem Sender (9) der Zielmarkierungsvorrichtung (1) gesendet werden;
• Mittel (15) zum Verwalten dieser Positionsinformationen zum Führen des Fluggeräts (13); und
• Mittel (17) zur Verarbeitung eines Ziels (C);
**dadurch gekennzeichnet, dass** die Flugeinheit (2) eine kleinere Größe aufweist als die eines Quaders zu zwanzig Zentimeter Seitenlänge, dass die Datenübertragungseinheit (6) konfiguriert ist, um mindestens Daten in Zusammenhang mit Messungen, die von dem Sensor (4) ausgehend von der Flugeinheit (2) ausgeführt werden, zu senden, und um Führungsbefehle an der Flugeinheit (2) zu empfangen, und dass der Sender (9) an der Flugeinheit (2) befestigt ist.

2. System nach Anspruch 1,
**dadurch gekennzeichnet, dass** die Flugeinheit (2) mit mindestens einem Sensor (4) versehen ist, der geeignet ist, ein Bild mindestens eines Teils der Umgebung der Flugeinheit zu erzeugen, und dass die Datenübertragungseinheit (6) konfiguriert ist, um das Bild zu einer Anzeigeeinheit (10A) eines dezentralen Postens (8) zu übertragen.

3. System nach einem der Ansprüche 1 und 2,
**dadurch gekennzeichnet, dass** die Flugeinheit (2) mit mindestens einem der folgenden Sensoren (4) versehen ist:
- einem Wärmesensor;
- einem Sensor, der geeignet ist, ein Bild der Umgebung zu erzeugen;
- mindestens einem Sensor, der geeignet ist, einen der folgenden Umgebungsparameter zu analysieren: einen chemischen Parameter, einen mechanischen Parameter und einen elektromagnetischen Parameter.

4. System nach einem der vorstehenden Ansprüche,
**dadurch gekennzeichnet, dass** es ergänzend mindestens einen zusätzlichen Sender (9) umfasst, der abnehmbar auf der Flugeinheit (2) montiert und mit mindestens einem Anbringungselement (18) versehen ist, das konfiguriert ist, um es zu erlauben, den zusätzlichen Sensor (9) auf einem Träger (C) anzubringen.

5. System nach einem der vorstehenden Ansprüche, **dadurch gekennzeichnet, dass** der oder die Sender (9) konfiguriert sind, um einen Richtungsführungsstrahl zu senden.

6. System nach einem der vorstehenden Ansprüche,
**dadurch gekennzeichnet, dass** die Flugeinheit (2) mindestens eine Zentraleinheit (20) umfasst, die konfiguriert ist, um Daten und mindestens Daten, die von dem Sensor (4) empfangen werden, zu verarbeiten.

7. System nach Anspruch 6,
**dadurch gekennzeichnet, dass** die Zentraleinheit (2) geeignet ist, automatisch Führungsbefehle, die zum Führen der Flugeinheit (2) verwendet werden, zu bestimmen.

8. System nach einem der vorstehenden Ansprüche,
**dadurch gekennzeichnet, dass** die Flugeinheit (2) eine Empfangseinheit (21) umfasst, die konfiguriert ist, um elektromagnetische Signale zu empfangen, und eine Datenverwaltungseinheit (20), die konfiguriert ist, um elektromagnetische Signale, die von der Empfangseinheit (21) empfangen werden, zu verarbeiten.

9. System nach einem der vorstehenden Ansprüche,
**dadurch gekennzeichnet, dass** die Flugeinheit (2) mit aktivierbaren Mitteln (22) versehen ist, die geeignet sind, eine Explosion zu erzeugen.

10. System nach Anspruch 8,
**dadurch gekennzeichnet, dass** es eine Vielzahl von Zielmarkierungsvorrichtungen (1) umfasst, wobei die Vielzahl von Zielmarkierungsvorrichtungen (1) angepasst sind, miteinander über eine Informationsübertragungseinheit in Kommunikation zu stehen, die die Empfangseinheiten (21) umfasst, um sich in dem Raum zueinander derart zu positionieren, dass eine Führungskette (23) für mindestens ein autonomes Fluggerät (13) geschaffen wird, das Signale (S) sukzessive von den unterschiedlichen Flugeinheiten (2) bei einer Bewegung entlang der Führungskette (23) empfängt.

11. System nach einem der Ansprüche 1 bis 10,
**dadurch gekennzeichnet, dass**:
- die Zielmarkierungsvorrichtung (1) eine Markierungsvorrichtung eines zu neutralisierenden Ziels ist; und
- das autonome Fluggerät (13) ein Lenkflugkörper (13A) ist.

12. System nach einem der Ansprüche 1 bis 10, **dadurch gekennzeichnet, dass**:
- die Zielmarkierungsvorrichtung (1) eine Vorrichtung zum Lokalisieren mindestens einer Person (24) in Not und zum Markieren ihrer Position ist; und
- das autonome Fluggerät (13) ein Rettungsfahrzeug (13B) ist.

## Claims

1. Target processing system, said system comprising
- at least one target marking device (1), said target marking device comprising at least:
• one small-size flying unit (2), said flying unit (2) being configured to fly at low height and to be guided with the aid of guidance commands, said flying unit (2) being provided with at least one sensor (4) able to measure at least one parameter of the environment;
• one data transmission unit (6); and
• at least one emitter (9) able to emit position information; and
- at least one autonomous flying device (13), said autonomous flying device (13) comprising:
• means (14) for detecting position information, emitted by the emitter (9) of said target marking device (1);
• means (15) for managing this position information for the purpose of guiding the flying device (13); and
• means (17) for processing a target (C);
**characterised in that** said flying unit (2) has a size less than that of a cube with sides of twenty centimetres, and it that the data transmission unit (6) is configured to emit at least data relating to measurements carried out by the sensor (4) from the flying unit (2) and to receive guidance orders at said flying unit (2) and cin that said emitter (9) is fixed on said flying unit (2).

2. Device according to claim 1,
**characterised in that** the flying unit (2) is provided with at least one sensor (4) able to generate an image of at least one portion of the environment of the flying unit, and **in that** said data transmission unit (6) is configured to transmit said image to a display unit (10A) of a remote station (8).

3. Device according to one of claims 1 and 2,
**characterised in that** the flying unit (2) is provided with at least one of the following sensors (4):
- a thermal sensor;
- a sensor able to generate an image of the environment;
- at least one sensor able to analyse one of the following parameters of the environment: a chemical parameter, mechanical parameter, and an electromagnetic parameter.

4. Device as claimed in any preceding claim,
**characterised in that** it further comprises a further emitter (9) that is mounted, in a removable manner, on said flying unit (2) and is provided with at least one attachment element (18) configured to make it possible to attach said further emitter (9) to a support (C).

5. Device as claimed in any preceding claim,
**characterised in that** said emitter (9) or said emitters (9) are configured to emit a directional guidance beam.

6. Device as claimed in any preceding claim,
**characterised in that** said flying unit (2) comprises at least one central unit (20) configured to process data and at least data received from said sensor (4).

7. Device according to claim 6,
**characterised in that** said central unit (2) is able to automatically determine guidance commands used to guide the flying unit (2).

8. Device as claimed in any preceding claim,
**characterised in that** said flying unit (2) comprises a receiving unit (21) configured to receive electromagnetic signals, and a data management unit (20) configured to process electromagnetic signals received by said receiving unit (21).

9. Device as claimed in any preceding claim,
**characterised in that** said flying unit (2) is provided with means (22) that can be activated able to generate an explosion.

10. System according to claim 8,
**characterised in that** it comprises a plurality of target marking devices (1), , said plurality of target marking devices (1) being able to communicate between them with the aid of a data transmission unit including the receiving units (21) in order to position themselves in space with respect to one another so as to create a guidance chain (23) for at least one autonomous flying device (13), receiving signals (S) successively from the different flying units (2) during a displacement along the guidance chain (23).

11. System according to one of claims 1 to 10,
**characterised in that**:
- said target marking device (1) is a device for marking a target to be neutralised; and
- said autonomous flying device (13) is a missile (13A).

12. System according to one of claims 1 and 10,
**characterised in that**:
- said target marking device (1) is a device for locating at least one person (24) in distress and for marking the position of this person; and
- said autonomous flying device (13) is a rescue vehicle (13B).
